# EUROPEAN PATENT SPECIFICATION

(11) **EP 0 553 545 B1**
(45) Date of publication and mention of the grant of the patent: **13.09.2000**
(21) Application number: 92309870.1
(22) Date of filing: 28.10.1992
(51) Int. Cl.: G06F 1/00, G11B 7/00, G11B 7/007, G11B 7/013, G11B 20/00

(54) **Optical disk and security check method for the same**
Optische Disk und Verfahren zur Sicherheitskontrolle dafür
Disque optique et méthode de contrôle de sécurité pour ceci

(30) Priority: 31.01.1992 JP 1700692
(43) Date of publication of application: 04.08.1993
(60) Divisional application: 96103322.2
(73) Proprietor: SEGA ENTERPRISES, LTD., Tokyo 144 (JP)
(72) Inventor: Asai, Toshinori, c/o K.K. Sega Enterprises, Tokyo 144 (JP); Kawohori, Masaki, c/o K.K. Sega Enterprises, Tokyo 144 (JP)
(74) Representative: SERJEANTS

(56) References cited:
- EP-A- 0 080 244
- EP-A- 0 378 385
- EP-A- 0 447 043
- US-A- 4 462 076
- PATENT ABSTRACTS OF JAPAN vol. 15, no. 335 (P-1242)26 August 1991 & JP-A-3 122 713 ( SANYO ) 24 May 1991

## Description

### BACKGROUND OF THE INVENTION

The invention relates to security check methods for information storage media for storing application software such as game programs.

The CD (compact disk) was originally developed as a sound recording medium, but more recently has attracted attention as a large capacity storage medium for information other than sound. Since the information on a CD is digitally recorded, it is suited for computer processing. Many types of information can be stored, including programs, data and images. CDs containing information other than sound recordings or additional to sound recordings are known as CD-ROMs (compact disk read-only memories).

Game software for video game machines is now supplied on CD-ROMs as an alternative to conventional cartridges. In addition to the game program, the CD-ROM can contain a large quantity of information readable as video images, sound, etc. This can be decoded in accordance with the progress of the game, enabling the provision of video games which are more illustrative and have better picture and sound quality.

It is necessary for any given game machine to be able to recognize cartridges or CD-ROMs storing game software inserted in it as being of an appropriate format and as being produced by the authentic game machine maker or duly licensed and proper for use in that machine. Once so recognized, an indication of the authorized production or the licence may be displayed on the television connected to the game machine as a preliminary to the game. Such licences may be granted by video game machine makers for software producers to make game software exclusively for use on their game machines.

In order to reject unlicensed or unauthorized game software there have been proposed various kinds of security systems for such game machines. One of the prior art security systems was proposed in US-A-4462076. This prior art proposes to use the copyright notice and the name of the copyright proprietor as the security message.

European patent application EP-A-0080244 discloses a security system for a data processing system such as a game device using game cartridges. A program in the game device reads data from the cartridge and uses the data to display an identifier. The identifier is then compared with a reference identifier and operation of the game is disabled if the identifiers do not match.

The present invention proposes a novel and further improved security system which increases the difficulty of breaking the security system.

### SUMMARY OF THE INVENTION

The invention provides an optical disk for use with a game device which stores a reference security code, wherein the optical disk comprises a first region located to be read and first executed by the game device when actuated and a second region storing an application program, said first region comprising a security code to be compared with the reference security code when the optical disk is loaded on the game device; characterized in that said first region comprises an identifier region in which a disk identifier is recorded and a security code region in which said security code is recorded; and the security code comprises a program to be executed by the game device and arranged so that when the program in the security code read from the optical disk agrees with the reference security code, the program in the security code is executed before enabling the application program to indicate a producer and/or a licensor of the application program.

The invention also provides a security check method for an optical disk to be mounted on a game device which stores a reference security code, said optical disk comprising a first region containing an identifier region in which a disk identifier is recorded and a security code region in which a security code is recorded, and a second region storing an application program, the method comprising the steps of:
reading the disk identifier from said first region of the optical disk when mounted on the game device;
comparing the read disk identifier with a stored identifier to check whether or not the read disk identifier is correct;
reading the security code from said first region of the optical disk when mounted on said game device;
comparing the read security code with the reference security code stored in said game device to check whether or not the read security code agrees with said reference security code; and
enabling the said application program when the read security code agrees with the reference security code;
   characterized in that said security code comprises a program to be executed by the game device before enabling the application program; and
said method further comprises the step of, when the program in the security code read from the optical disk agrees with the reference security code, executing the program in the security code to indicate a producer and/or a licensor of the application program before enabling the application program.

Furthermore, the invention provides a game device comprising memory means storing a reference security code; mounting means on which an optical disk may be mounted, said optical disk comprising a first region storing a security code and a second region storing an application program; means for comparing the security code read from the first region with the reference security code; and enabling the application program read from the second region when the security code read from the first region agrees with the reference security code;
characterized in that said first region contains an identifier region in which a disk identifier is recorded, and a security code region in which said security code is recorded; said security code comprising a program to be executed by the game device before enabling the application program;
and means are provided for executing the program in the security code when the program in the security code agrees with the reference security code to indicate a producer and/or a licensor of the application program.

### BRIEF DESCRIPTION OF THE DRAWINGS

Figure 1 is a plan view of a CD-ROM according to the invention, diagrammatically showing part of the information recorded on it;
Figure 2 is a first part of a flow chart illustrating a CD-ROM security check method according to the invention; and
Figure 3 is a continuation and conclusion of the flow chart of Figure 2.

### DETAILED DESCRIPTION OF THE INVENTION

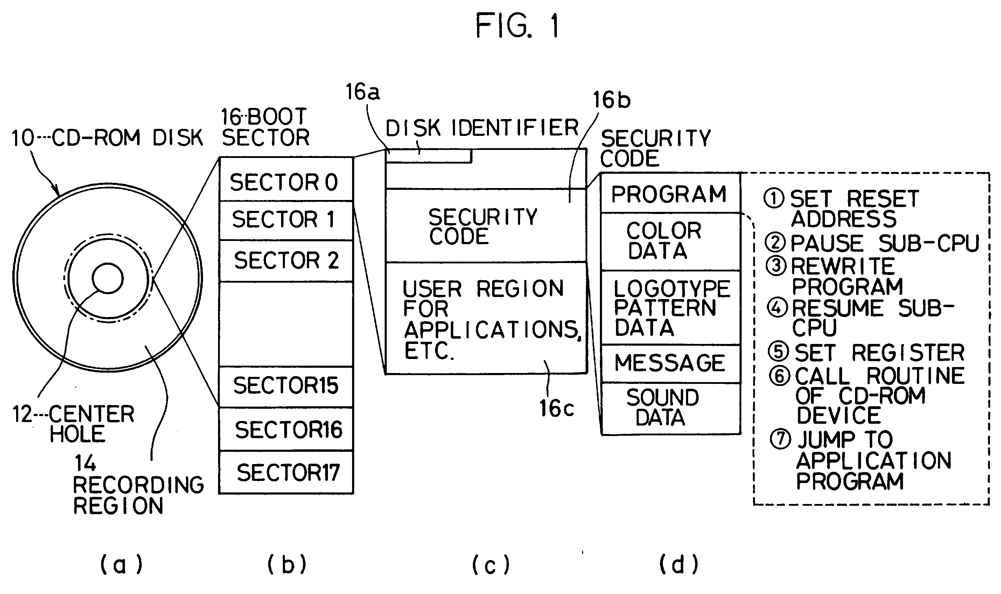

Referring to Figure 1(a), a CD-ROM 10 according to one embodiment of the invention has a diameter of 120 mm. A 15 mm diameter centre hole 12 is formed in the centre of the CD-ROM 10. A boot sector 16 to be first read when actuated is provided on the innermost track of a recording region 14 in which ROM data and audio data is recorded.

As shown in Figure 1 (b), the boot sector has an area from Logic Sector Numbers 0 to 15. A disk identifier and a security code are recorded in the boot sector, i.e., in plural ones of the sectors of the boot sector in view of possible recording or read errors. Usually they are recorded in the first sector of the boot sector having Logic Sector No. 0.

The disk identifier indicates a kind of the CD-ROM 10, and as shown in Figure 1(c) is usually recorded in an identifier region 16a at the foremost part of the boot sector 16. In this embodiment, two kinds of identifiers, "SEGADISCSYSTEM□□" and "SEGABOOTDISC□□□□" (□ represents a space), are used. The former identifier "SEGADISCSYSTEME□□" is a disk identifier to be used in a CD-ROM carrying game software which ends on the disk. The latter identifier "SEGABOOTDISC□□□□" is a disk identifier to be used in a CD-ROM carrying game software which is continued on a plurality of CD-ROMs, and is to be recorded in the first of the CD-ROMs carrying the game software.

The security code indicates that the CD-ROM 10 is produced by or duly licensed by an authentic game machine maker. As shown in Figure 1(c), the security code is recorded in a security region 16b at a preset address in the boot sector 16.

As shown in Figure 1(d), the security code contains a program to be executed after a checking operation of the security code, colour data indicative of colours of LOGOTYPE to be displayed, LOGOTYPE pattern data indicative of patterns of LOGOTYPE to be displayed, message data indicative of a message "PRODUCED BY OR UNDER LICENCE FROM XXXX", and sound data indicative of a licensor television game machine maker. (Note, at the portion "XXXX" the name of the authentic game machine maker is inserted, for example "SEGA ENTERPRISES LTD.")

This embodiment is especially characterized in that a program itself to be executed following checking of the security code is contained in the security code. In other words, the program for displaying the LOGOTYPE and message data indicative of a producer and/or a licensor of the game software is used as a security code. The program involved in this embodiment is executed by the main CPU of a television game machine. As shown in Figure 1(d), the program includes seven steps.

In the first step, an address to which the main CPU jumps when the television game machine is reset is set.

In the second step, a sub-CPU provided in a CD-ROM reader which forms part of the television game machine is temporarily paused.

In the third step, the contents of the program memory of the sub-CPU are rewritten from data recorded on the CD-ROM.

In the fourth step, the operation of the temporarily paused sub-CPU is resumed.

In some television game machines, these second through fourth steps may be omitted.

In the fifth step, the head addresses of data recorded on the CD-ROM are set in a register of the main CPU.

In the sixth step, a required program routine stored in the CD-ROM device is executed. This program routine performs a resetting operation, such as licence display.

The program routine involved in this embodiment performs the following resetting operation.

First a vertical interrupt address is set. Next, a sound processor and a video processor are reset, while a video RAM is cleared, and ASCII character graphics are set. Then, based on colour data stored in the security code 16b, display colours are set, and based on LOGOTYPE data in the security code 16b, LOGOTYPE character graphics are set. Subsequently message data (PRODUCED BY OR UNDER LICENCE FROM XXXX) in the security code 16b are displayed on a television screen, and a LOGOTYPE map is set to display LOGOTYPE on the television screen. Then, after one second, based on sound data stored in the security code 16b, sounds indicative of a licensor television game machine maker are outputted, and a LOGOTYPE mark colour is changed, and then the television screen display is cleared.

Finally in the seventh step, a jump is performed to an application program, such as a game program.

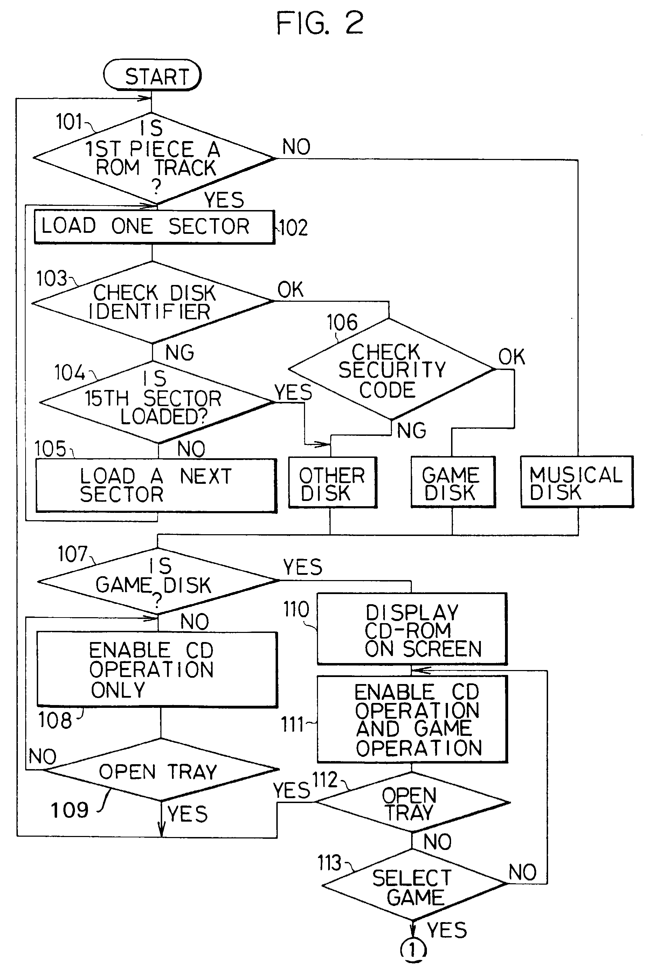

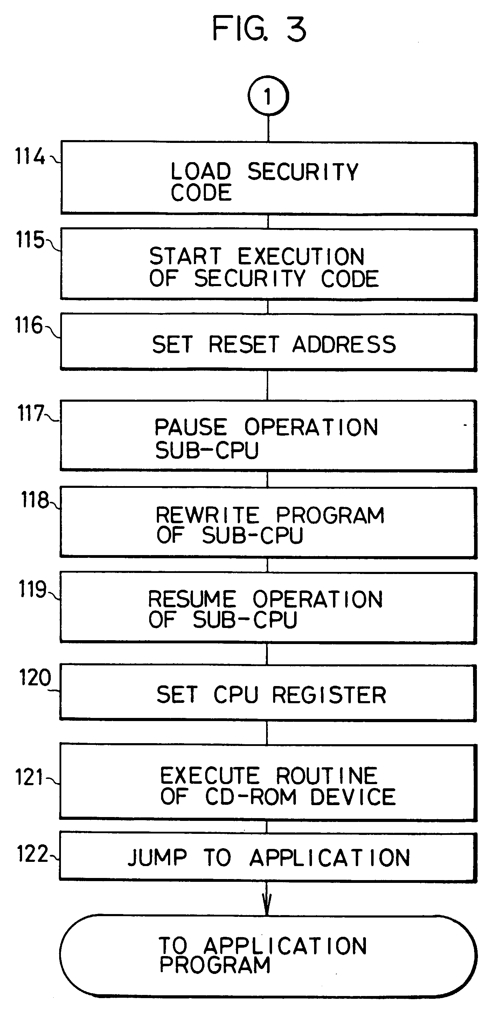

A CD-ROM security check method according to one embodiment of the invention is next described with reference to Figures 2 and 3 of the drawings.

In the flow charts of Figures 2 and 3, Steps 101 to 106 are for checking the security code by the sub-CPU of the CD-ROM reader provided in the television game machine. Step 107 and subsequent steps are for operations by the main CPU provided in the television game machine.

First it is determined whether or not one piece read from the CD-ROM 10 is a ROM track (Step 101). If it is not a ROM track, the disk is determined to be a conventional music CD.

If it is determined to be a ROM track, the first sector of the boot sector 16 is loaded (Step 102). Next, the disk identifier recorded in the identifier region 16a of the boot sector 16 is compared with a disk identifier stored in the memory of the CD-ROM reader (Step 103).

If the recorded and stored identifiers do not agree, it is determined whether or not all the sectors of the boot sector 16 have been loaded (Step 104). If all the sectors of the boot sector 16 have not been loaded, a next load sector is set (Step 105), and the processing is returned to Step 102. If all the sectors of the boot sector 16, and there is still no agreement between the recorded identifier and the stored identifier, the disk is determined to be a CD-ROM but not a game disk.

When the recorded identifier agrees with the stored identifier in Step 103, then a security code recorded in the security region 16a in the boot sector 16 is compared with the security code stored in the memory of the CD-ROM device (Step 106). If the recorded security code agrees with the stored security code, the CD-ROM is determined a duly authorized or licensed proper game disk. If the recorded security code does not agree with the stored security code, the disk is determined a different disk.

The processing heretofore is the operation of the sub-CPU provided in the CD-ROM reader. This processing is followed by the operation by the main CPU provided in the television game machine.

First, it is determined whether or not the loaded CD-ROM 10 is a game disk (Step 107). If the disk is not a game disk, the operation for the usual music CD is enabled (Step 108). Incessantly it is determined whether or not the tray of the CD-ROM reader is opened (Step 109). If it is determined that the tray has been opened, there will be a possibility that the loaded CD-ROM 10 has been replaced, and the processing is returned to Step 101.

In Step 107, when the loaded CD-ROM 10 is determined to be a game disk, "CD-ROM" is displayed on the television screen (Step 110), and both the operation of the usual musical CD and the game operation are enabled (Step 111). Incessantly it is determined whether or not the tray of the CD-ROM reader is opened (Step 112). If it is determined that the tray has been opened, there will be a possibility that the CD-ROM 10 has been replaced, and the processing is returned to Step 101.

Subsequently it is determined which has been selected between the usual musical CD operation and the game operation (Step 113). If the game operation is selected, Step 114, which will be explained below, will follow.

First, the security code is loaded from the CD-ROM 10 (Step 114). Then a program contained in the security code starts to be executed (Step 115).

The first step of the program is executed, and an address to which the main CPU should jump when the television game machine is reset is set (Step 116).

Then, the second step of the program is executed, and the operation of the sub-CPU provided in the CD-ROM reader is temporarily paused (Step 117).

Next, the third step of the program is executed, and contents of the program memory of the sub-CPU is rewritten from data recorded on the CD-ROM 10 (Step 118).

Then the fourth step of the program is executed, and the operation of the temporarily paused sub-CPU is resumed (Step 119).

In some television game machines, these steps 117 to 119 can be skipped.

Then the fifth step of the program is executed, and the head addresses of data recorded in the CD-ROM are set in a register provided in the main CPU (Step 120).

Next, the sixth step of the program is executed, and a required program routine stored in the CD-ROM device is executed (Step 121). In this program routine, resetting operation including the above-described licence display, etc. is performed.

Returning from the program routine stored in the CD-ROM device, the seventh step of the program is executed to jump to an application program (Step 122), and the execution of the application program of a game or others is started, and the security check operation of the CD-ROM is finished.

The invention is not limited to the particular embodiment described above. Other embodiments within the scope of the appended claims are included. For example, the program contained in the security code is not limited to the program above described but may be any kind of program.

## Claims

1. An optical disk (10) for use with a game device which stores a reference security code, wherein the optical disk (10) comprises a first region (16) located to be read and first executed by the game device when actuated and a second region (14) storing an application program, said first region (16) comprising a security code to be compared with the reference security code when the optical disk (10) is loaded on the game device;
characterized in that said first region (16) comprises an identifier region (16a) in which a disk identifier is recorded and a security code region (16b) in which said security code is recorded; and
the security code comprises a program to be executed by the game device and arranged so that when the program in the security code read from the optical disk (10) agrees with the reference security code, the program in the security code is executed before enabling the application program to indicate a producer and/or a licensor of the application program.

2. An optical disk (10) according to claim 1, characterized in that the program in the security code includes a message-displaying program arranged so that the message-displaying program is executed by the game device so as to generate a message display signal when the message-displaying program agrees with the reference security code.

3. An optical disk (10) according to claim 2, wherein said security code includes message data associated with the message-displaying program.

4. An optical disk (10) according to claim 3, wherein said message data is indicative of a LOGOTYPE.

5. An optical disk (10) according to claim 1, characterized in that the program in said security code comprises the steps of:
setting addresses of data recorded in the optical disk (10) into a register of the game device; and
executing a required program routine stored in the game device.

6. An optical disk (10) according to any one of claims 1 to 5, wherein the optical disk (10) is a CD-ROM, said first region is located at the innermost track (16) on the CD-ROM (10) and said game device includes a CD-ROM reader which first reads the innermost track (16) when the CD-ROM (10) is loaded on the CD-ROM reader.

7. An optical disk (10) according to claim 6, characterized in that the program in said security code comprises the steps of:
temporarily pausing a sub-CPU provided in the game device to control the operation of the CD-ROM;
rewriting data recorded on the CD-ROM into a memory of the sub-CPU;
resuming operation of the temporarily paused sub-CPU;
setting addresses of data recorded in the optical disk (10) into a register of a main CPU of the game device; and
executing a required program routine stored in the game device.

8. A security check method for an optical disk (10) to be mounted on a game device which stores a reference security code, said optical disk (10) comprising a first region (16) containing an identifier region (16a) in which a disk identifier is recorded and a security code region (16b) in which a security code is recorded, and a second region (14) storing an application program, the method comprising the steps of:
reading the disk identifier (16a) from said first region (16) of the optical disk (10) when mounted on the game device;
comparing the read disk identifier with a stored identifier to check whether or not the read disk identifier is correct;
reading the security code from said first region (16) of the optical disk (10) when mounted on said game device;
comparing the read security code with the reference security code stored in said game device to check whether or not the read security code agrees with said reference security code; and
enabling the said application program when the read security code agrees with the reference security code;
characterized in that said security code comprises a program to be executed by the game device before enabling the application program; and
said method further comprises the step of, when the program in the security code read from the optical disk (10) agrees with the reference security code, executing the program in the security code to indicate a producer and/or a licensor of the application program before enabling the application program.

9. A security check method according to claim 8, characterized in that:
the program in the security code includes a message-displaying program; and
the method further comprises the step of executing the message-displaying program so as to generate a message display signal when the message-displaying program agrees with the reference security code.

10. A security check method according to claim 8 or claim 9, wherein said security code includes message data associated with the message-displaying program.

11. A security check method according to claim 10, wherein said message data is indicative of a LOGOTYPE.

12. A security check method according to claim 8, characterized in that the program in said security code comprises the steps of:
setting addresses of data recorded in the optical disk (10) into a register of the game device; and
executing a required program routine stored in the game device.

13. A security check method according to any one of claims 8 to 12, wherein said optical disk (10) is a CD-ROM, said first region (16) is located at the innermost track on a CD-ROM (10) and said game device includes a CD-ROM reader which first reads the innermost track (16) when the CD-ROM (10) is loaded on the CD-ROM reader.

14. A security check method according to claim 13, characterized in that the program in said security code comprises the steps of:
temporarily pausing a sub-CPU provided in the game device to control the operation of the CD-ROM;
rewriting data recorded on the CD-ROM (10) into a memory of the sub-CPU;
resuming operation of the temporarily paused sub-CPU;
setting addresses of data recorded in the optical disk (10) into a register of a main CPU of the game device; and
executing a required program routine stored in the game device.

15. A game device comprising memory means storing a reference security code; mounting means on which an optical disk (10) may be mounted, said optical disk (10) comprising a first region (16) storing a security code and a second region (14) storing an application program; means for comparing the security code read from the first region (16) with the reference security code; and enabling the application program read from the second region (14) when the security code read from the first region (16) agrees with the reference security code;
characterized in that said first region (16) contains an identifier region (16a) in which a disk identifier is recorded, and a security code region (16b) in which said security code is recorded; said security code comprising a program to be executed by the game device before enabling the application program;
and means are provided for executing the program in the security code when the program in the security code agrees with the reference security code to indicate a producer and/or a licensor of the application program.

16. A game device according to claim 15, characterized in that the program in the security code includes a message-displaying program, the message-displaying program being executed so as to generate a message display signal when the message-displaying program agrees with the reference security code.

17. A game device according to claim 16, wherein said security code includes message data associated with the message-displaying program.

18. A game device according to claim 17, wherein said message data is indicative of a LOGOTYPE.

19. A game device according to any one of claims 15 to 18, wherein the optical disk (10) is a CD-ROM, said first region is located at the innermost track (16) on the CD-ROM (10) and said game device includes a CD-ROM reader which first reads the innermost track (16) when the CD-ROM (10) is loaded on the CD-ROM reader.

## Patentansprüche

1. Optische Platte (10) zur Verwendung mit einer Spielvorrichtung, die einen Referenz-Sicherheitscode speichert, wobei die optische Platte (10) einen ersten Bereich (16) aufweist, der so angeordnet ist, daß er gelesen und zuerst von der Spielvorrichtung ausgeführt wird, wenn sie betätigt wird, sowie einen zweiten Bereich (14), der ein Anwendungsprogramm speichert, wobei der erste Bereich (16) einen Sicherheitscode aufweist, der mit dem Referenz-Sicherheitscode verglichen werden soll, wenn die optische Platte (10) in die Spielvorrichtung geladen wird; dadurch gekennzeichnet, daß der erste Bereich (16) einen Identifiziererbereich (16a) aufweist, in dem ein Plattenidentifizierer aufgezeichnet ist, sowie einen Sicherheitscodebereich (16b), in dem der Sicherheitscode aufgezeichnet ist; und der Sicherheitscode ein Programm aufweist, das durch die Spielvorrichtung ausgeführt werden soll und so angeordnet ist, daß, wenn das Programm in dem von der optischen Platte (10) gelesenen Sicherheitscode mit dem Referenz-Sicherheitscode übereinstimmt, das Programm in dem Sicherheitscode ausgeführt wird, bevor das Anwendungsprogramm aktiviert wird, um einen Hersteller und/oder einen Lizenzgeber des Anwendungsprogramms anzugeben.

2. Optische Platte (10) nach Anspruch 1, dadurch gekennzeichnet, daß das Programm in dem Sicherheitscode ein Programm zur Darstellung einer Meldung enthält, das so angeordnet ist, daß das Programm zur Darstellung einer Meldung von der Spielvorrichtung ausgeführt wird, so daß ein Signal zur Darstellung einer Meldung erzeugt wird, wenn das Programm zur Darstellung einer Meldung mit dem Referenz-Sicherheitscode übereinstimmt.

3. Optische Platte (10) nach Anspruch 2, wobei der Sicherheitscode Meldungsdaten enthält, die dem Programm zur Darstellung einer Meldung zugeordnet sind.

4. Optische Platte (10) nach Anspruch 3, wobei die Meldungsdaten einen LOGOTYPE angeben.

5. Optische Platte (10) nach Anspruch 1, dadurch gekennzeichnet, daß das Programm in dem Sicherheitscode die folgenden Schritte umfaßt:
- Setzen von Adressen für in der optischen Platte (10) aufgezeichnete Daten in ein Register der Spielvorrichtung; und
- Ausführen einer in der Spielvorrichtung gespeicherten, erforderlichen Programmroutine.

6. Optische Platte (10) nach einem der Ansprüche 1 bis 5, wobei die optische Platte (10) eine CD-ROM ist, wobei der erste Bereich an der innersten Spur (16) auf der CD-ROM (10) angeordnet ist, und wobei die Spielvorrichtung einen CD-ROM-Leser aufweist, der die innerste Spur (16) zuerst liest, wenn die CD-ROM (10) in den CD-ROM-Leser geladen wird.

7. Optische Platte (10) nach Anspruch 6, dadurch gekennzeichnet, daß das Programm in dem Sicherheitscode die folgenden Schritte umfaßt:
- vorübergehendes Unterbrechen einer in der Spielvorrichtung vorgesehenen Unter-Zentraleinheit, um den Betrieb der CD-ROM zu steuern;
- Zurückschreiben von auf der CD-ROM aufgezeichneten Daten in einen Speicher der Unter-Zentraleinheit;
- Wiederaufnehmen des Betriebs der vorübergehend unterbrochenen Unter-Zentraleinheit;
- Setzen von Adressen für in der optischen Platte (10) aufgezeichnete Daten in ein Register einer Haupt-Zentraleinheit der Spielvorrichtung; und
- Ausführen einer in der Spielvorrichtung gespeicherten, erforderlichen Programmroutine.

8. Sicherheitsüberprüfungsverfahren für eine optische Platte (10), die an einer Spielvorrichtung angebracht werden soll, die einen Referenz-Sicherheitscode speichert, wobei die optische Platte (10) einen ersten Bereich (16) umfaßt, der einen Identifiziererbereich (16a) enthält, in dem ein Plattenidentifizierer aufgezeichnet ist, und einen Sicherheitscodebereich (16b), in dem ein Sicherheitscode aufgezeichnet ist, sowie einen zweiten Bereich (14), der ein Anwendungsprogramm speichert, wobei das Verfahren die folgenden Schritte umfaßt:
- Lesen des Plattenidentifizierers (16a) von dem ersten Bereich (16) der optischen Plane (10), wenn sie an der Spielvorrichtung angebracht ist;
- Vergleichen des gelesenen Plattenidentifizierers mit einem gespeicherten Identifizierer, um zu überprüfen, ob der gelesene Plattenidentifizierer korrekt ist oder nicht;
- Lesen des Sicherheitscodes aus dem ersten Bereich (16) der optischen Platte (10), wenn sie an der Spielvorrichtung angebracht ist;
- Vergleichen des gelesenen Sicherheitscodes mit dem in der Spielvorrichtung gespeicherten Referenz-Sicherheitscode, um zu überprüfen, ob der gelesene Sicherheitscode mit dem Referenz-Sicherheitscode übereinstimmt oder nicht; und
- Aktivieren des Anwendungsprogramms, wenn der gelesene Sicherheitscode mit dem Referenz-Sicherheitscode übereinstimmt;
dadurch gekennzeichnet, daß
- der Sicherheitscode ein Programm umfaßt, das von der Spielvorrichtung ausgeführt werden soll, bevor das Anwendungsprogramm aktiviert wird; und
- das Verfahren des weiteren den Schritt umfaßt, wenn das Programm in dem von der optischen Platte (10) gelesenen Sicherheitscode mit dem Referenz-Sicherheitscode übereinstimmt, daß das Programm in dem Sicherheitscode ausgeführt wird, um einen Hersteller und/oder einen Lizenzgeber des Anwendungsprogramms anzugeben, bevor das Anwendungsprogramm aktiviert wird.

9. Sicherheitsüberprüfungsverfahren nach Anspruch 8, dadurch gekennzeichnet, daß
- das Programm in dem Sicherheitscode ein Programm zur Darstellung einer Meldung enthält; und
- das Verfahren weiterhin den Schritt des Ausführens des Programms zur Darstellung einer Meldung umfaßt, so daß ein Signal zur Darstellung einer Meldung erzeugt wird, wenn das Programm zur Darstellung einer Meldung mit dem Referenz-Sicherheitscode übereinstimmt.

10. Sicherheitsüberprüfungsverfahren nach Anspruch 8 oder Anspruch 9, wobei der Sicherheitscode Meldungsdaten enthält, die dem Programm zur Darstellung einer Meldung zugeordnet sind.

11. Sicherheitsüberprüfungsverfahren nach Anspruch 10, wobei die Meldungsdaten einen LOGOTYPE angeben.

12. Sicherheitsüberprüfungsverfahren nach Anspruch 8, dadurch gekennzeichnet, daß das Programm in dem Sicherheitscode die folgenden Schritte umfaßt:
- Setzen von Adressen für in der optischen Platte (10) aufgezeichnete Daten in ein Register der Spielvorrichtung; und
- Ausführen einer in der Spielvorrichtung gespeicherten, erforderlichen Programmroutine.

13. Sicherheitsüberprüfungsverfahren nach einem der Ansprüche 8 bis 12, wobei die optische Platte (10) eine CD-ROM ist, wobei der erste Bereich (16) an der innersten Spur auf der CD-ROM (10) angeordnet ist, und wobei die Spielvorrichtung einen CD-ROM-Leser aufweist, der die innerste Spur (16) zuerst liest, wenn die CD-ROM (10) in den CD-ROM-Leser geladen wird.

14. Sicherheitsüberprüfungsverfahren nach Anspruch 13, dadurch gekennzeichnet, daß das Programm in dem Sicherheitscode die folgenden Schritte umfaßt:
- vorübergehendes Unterbrechen einer in der Spielvorrichtung vorgesehenen Unter-Zentraleinheit, um den Betrieb der CD-ROM zu steuern;
- Zurückschreiben von auf der CD-ROM (10) aufgezeichneten Daten in einen Speicher der Unter-Zentraleinheit;
- Wiederaufnehmen des Betriebs der vorübergehend unterbrochenen Unter-Zentraleinheit;
- Setzen von Adressen für in der optischen Plane (10) aufgezeichnete Daten in ein Register einer Haupt-Zentaleinheit der Spielvorrichtung; und
- Ausführen einer in der Spielvorrichtung gespeicherten, erforderlichen Programmroutine.

15. Spielvorrichtung, umfassend die folgenden Merkmale: Speichermittel, die einen Referenz-Sicherheitscode speichern; Befestigungsmittel, an denen eine optische Plane (10) angebracht werden kann, wobei die optische Platte (10) einen ersten Bereich (16) aufweist, der einen Sicherheitscode speichen, sowie einen zweiten Bereich (14), der ein Anwendungsprogramm speichert; Mittel zum Vergleichen des von dem ersten Bereich (16) gelesenen Sicherheitscodes mit dem Referenz-Sicherheitscode; und zum Aktivieren des von dem zweiten Bereich (14) gelesenen Anwendungsprogramms, wenn der von dem ersten Bereich (16) gelesene Sicherheitscode mit dem Referenz-Sicherheitscode übereinstimmt; dadurch gekennzeichnet, daß der erste Bereich (16) einen Identifiziererbereich (16a) enthält, in dem ein Plattenidentifizierer aufgezeichnet ist, sowie einen Sicherheitscodebereich (16b), in dem der Sicherheitscode aufgezeichnet ist; wobei der Sicherheitscode ein Programm enthält, das von der Spielvorrichtung ausgeführt werden soll, bevor das Anwendungsprogramm aktiviert wird; und daß Mittel vorgesehen sind zum Ausführen des Programms in dem Sicherheitscode, wenn das Programm in dem Sicherheitscode mit dem Referenz-Sicherheitscode übereinstimmt, um einen Hersteller und/oder einen Lizenzgeber des Anwendungsprogramms anzugeben.

16. Spielvorrichtung nach Anspruch 15, dadurch gekennzeichnet, daß das Programm in dem Sicherheitscode ein Programm zur Darstellung einer Meldung enthält, wobei das Programm zur Darstellung einer Meldung ausgeführt wird, so daß ein Signal zur Darstellung einer Meldung erzeugt wird, wenn das Programm zur Darstellung einer Meldung mit dem Referenz-Sicherheitscorde übereinstimmt.

17. Spielvorrichtung nach Anspruch 16, wobei der Sicherheitscode Meldungsdaten enthält, die dem Programm zur Darstellung einer Meldung zugeordnet sind.

18. Spielvorrichtung nach Anspruch 17, wobei die Meldungsdaten einen LOGOTYPE angeben.

19. Spielvorrichtung nach einem der Ansprüche 15 bis 18, wobei die optische Plane (10) eine CD-ROM ist, wobei der erste Bereich an der innersten Spur (16) auf der CD-ROM (10) angeordnet ist, und wobei die Spielvorrichtung einen CD-ROM-Leser aufweist, der die innerste Spur (16) zuerst liest, wenn die CD-ROM (10) in den CD-ROM-Leser geladen wird.

## Revendications

1. Un disque optique (10) servant avec un dispositif de jeu qui mémorise un code de sécurité de référence, dans lequel le disque optique (10) comprend une première zone (16) située pour être lue et tout d'abord exécutée par le dispositif de jeu quand il est activé et une deuxième zone (14) mémorisant un programme d'application, ladite première zone (16) comprenant un code de sécurité devant être comparé avec le code de sécurité de référence quand le disque optique (10) est chargé sur le dispositif de jeu ;
caractérisé en ce que ladite première zone (16) comprend une zone d'identification (16a) où un identificateur de disque est enregistré et une zone de code de sécurité (16b) où ledit code de sécurité est enregistré ; et
le code de sécurité comprend un programme qui doit être exécuté par le dispositif de jeu et conçu de telle manière que, lorsque le programme du code de sécurité lu à partir du disque optique (10) correspond au code de sécurité de référence, le programme du code de sécurité est exécuté avant d'activer le programme d'application pour indiquer un producteur et / ou un détenteur de licence du programme d'application.

2. Un disque optique (10) suivant la revendication 1, caractérisé en ce que le programme du code de sécurité comprend un programme d'affichage de message conçu de telle manière que le programme d'affichage de message est exécuté par le dispositif de jeu afin de produire un signal d'affichage de message quand le programme d'affichage de message correspond au code de sécurité de référence.

3. Un disque optique (10) suivant la revendication 2, dans lequel ledit code de sécurité comprend des données de message associées au programme d'affichage de message.

4. Un disque optique (10) suivant la revendication 3, dans lequel lesdites données de message indiquent un LOGOTYPE.

5. Un disque optique (10) suivant la revendication 1, caractérisé on ce que le programme dudit code de sécurité comprend les étapes suivantes : définir les adresses des données enregistrées surie disque optique (10) dans un registre du dispositif de jeu ; et exécuter un programme requis mémorisé dans le dispositif de jeu.

6. Un disque optique (10) suivant les revendications 1 à 5, dans lequel le disque optique (10) est un CD-ROM, ladite première zone est située sur la piste la plus à l'intérieur (16) sur le CD-ROM (10) et ledit dispositif de jeu comprend un lecteur de CD-ROM qui lit tout d'abord la piste la plus à l'intérieur (16) quand le CD-ROM (10) est chargé dans le lecteur de CD-ROM.

7. Un disque optique (10) suivant la revendication 6, caractérisé en ce que le programme dudit code de sécurité comprend les étapes suivantes :
interrompre provisoirement une sous-UC fournie dans le dispositif de jeu pour contrôler le fonctionnement du CD-ROM;
réécrire les données enregistrées sur le CD-ROM dans une mémoire de la sous-UC ;
reprendre le fonctionnement de la sous-UC provisoirement interrompue ;
définir les adresses des données enregistrées sur le disque optique (10) dans un registre de l'UC principale du dispositif de jeu ; et
exécuter un programme requis mémorisé dans le dispositif de jeu.

8. Une méthode de contrôle de sécurité pour un disque optique (10) devant être monté sur un dispositif de jeu qui mémorise un code de sécurité de référence, ledit disque optique (10) comprenant une première zone (16) contenant une zone d'identification (16a) où un identificateur de disque est enregistré et une zone de code de sécurité (16b) où un code de sécurité est enregistré, et une deuxième zone (14) mémorisant un programme d'application, la méthode comprenant les étapes suivantes :
lire l'identificateur de disque (16a) de ladite première zone (16) du disque optique (10) quand il est monté sur le dispositif de jeu ;
comparer l'identificateur de disque lu avec l'identificateur mémorisé pour vérifier si oui ou non l'identificateur de disque lu est correct ;
lire le code de sécurité de ladite première zone (16) du disque optique (16) quand il est monté sur ledit dispositif de jeu ;
comparer le code de sécurité lu avec le code de sécurité de référence mémorisé sur ledit dispositif de jeu pour vérifier si oui ou non le code de sécurité lu correspond audit code de sécurité de référence ; et
activer ledit programme d'application quand le code de sécurité lu correspond au code de sécurité de référence ;
caractérisée en ce que ledit code de sécurité comprend un programme devant être exécuté par le dispositif de jeu avant l'activation du programme d'application ; et
ladite méthode comprend de plus, quand le programme du code de sécurité lu à partir du disque optique (10) correspond au code de sécurité de référence, l'étape d'exécution du programme du code de sécurité pour indiquer un producteur et / ou un détenteur de licence du programme d'application avant l'activation du programme d'application.

9. Une méthode de contrôle de sécurité suivant la revendication 8, caractérisée en ce que :
le programme du code de sécurité comprend un programme d'affichage de message ; et
la méthode comprend de plus l'étape d'exécution du programme d'affichage de message afin de produire un signal d'affichage de message quand le programme d'affichage de message correspond au code de sécurité de référence.

10. Une méthode de contrôle de sécurité suivant la revendication 8 ou la revendication 9, dans laquelle ledit code de sécurité comprend des données de message associées au programme d'affichage de message.

11. Une méthode de contrôle de sécurité suivant la revendication 10, dans laquelle lesdites données de message indiquent un LOGOTYPE.

12. Une méthode de contrôle de sécurité suivant la revendication 8, caractérisée en ce que le programme dudit code de sécurité comprend les étapes suivantes :
définir les adresses des données enregistrées sur le disque optique (10) dans un registre du dispositif de jeu ; et
exécuter un programme requis mémorisé dans le dispositif de jeu.

13. Une méthode de contrôle de sécurité suivant les revendications 8 à 12, dans laquelle ledit disque optique (10) est un CD-ROM, ladite première zone (16) est située sur la piste la plus à l'intérieur sur le CD-ROM (10) et ledit dispositif de jeu comprend un lecteur de CD-ROM qui lit tout d'abord la piste la plus à l'intérieur (16) quand le CD-ROM (10) est chargé dans le lecteur de CD-ROM.

14. Une méthode de contrôle de sécurité suivant la revendication 13, caractérisée en ce que le programme dudit code de sécurité comprend les étapes suivantes :
interrompre provisoirement une sous-UC fournie dans le dispositif de jeu pour contrôler le fonctionnement du CD-ROM ;
réécrire les données enregistrées sur le CD-ROM (10) dans une mémoire de la sous-UC ;
reprendre le fonctionnement de la sous-UC provisoirement interrompue ;
définir les adresses des données enregistrées sur le disque optique (10) dans un registre de l'UC principale du dispositif de jeu ; et
exécuter un programme requis mémorisé dans le dispositif de jeu.

15. Un dispositif de jeu comprenant un moyen de mémoire mémorisant un code de sécurité de référence ; un moyen de montage sur lequel un disque optique (10) peut être monté, ledit disque optique (10) comprenant une première zone (16) mémorisant un code de sécurité et une deuxième zone (14) mémorisant un programme d'application ; un moyen de comparaison du code de sécurité lu sur la première zone (16) avec le code de sécurité de référence ; et
l'activation du programme d'application lu sur la deuxième zone (14) quand le code de sécurité lu sur la première zone (16) correspond au code de sécurité de référence ;
caractérisé en ce que ladite première zone (16) contient une zone d'identification (16a) où un identificateur de disque est enregistré, et une zone de code de sécurité (16b) où le dit code de sécurité est enregistré; ledit code de sécurité comprenant un programme devant être exécuté par le dispositif de jeu avant d'activer le programme d'application ; et
des moyens sont fournis pour exécuter le programme du code de sécurité quand le programme du code de sécurité correspond au code de sécurité de référence pour indiquer un producteur et / ou un détenteur de licence du programme d'application.

16. Un dispositif de jeu suivant la revendication 15, caractérisé en ce que le programme du code de sécurité comprend un programme d'affichage de message, le programme d'affichage de message étant exécuté afin de produire un signal d'affichage de message quand le programme d'affichage de message correspond au code de sécurité de référence.

17. Un dispositif de jeu suivant le revendication 16, dans lequel ledit code de sécurité comprend des données de message associées au programme d'affichage de message.

18. Un dispositif de jeu suivant le revendication 17, dans lequel lesdites données de message indiquent un LOGOTYPE.

19. Un dispositif de jeu suivant les revendications 15 à 18, dans lequel le disque optique (10) est un CD-ROM, ladite première zone est située sur la piste la plus à l'intérieur (16) sur le CD-ROM (10) et ledit dispositif de jeu comprend un lecteur de CD-ROM qui lit tout d'abord la piste la plus à l'intérieur (16) quand le CD-ROM (10) est chargé dans le lecteur de CD-ROM.
